# EUROPÄISCHE PATENTSCHRIFT

(11) **EP 3 083 239 B1**
(45) Veröffentlichungstag und Bekanntmachung des Hinweises auf die Patenterteilung: **27.02.2019**
(21) Anmeldenummer: 14821076.8
(22) Anmeldetag: 19.12.2014
(51) Int. Cl.: B32B 15/01, C22C 38/00, C22C 38/02, C22C 38/04, C22C 38/06, C22C 38/26, C22C 38/28, C22C 38/32, C22C 38/38

(54) **STAHLFLACHPRODUKT FÜR BAUTEILE FÜR EINE FAHRZEUGKAROSSERIE**
FLAT STEEL PRODUCT FOR COMPONENTS OF A CAR BODY FOR A MOTOR VEHICLE
PRODUIT EN ACIER PLAT POUR COMPOSANTS D'UN CARROSSERIE DE VEHICULE AUTOMOBILE

(30) Priorität: 20.12.2013 EP 13199058
(43) Veröffentlichungstag der Anmeldung: 26.10.2016
(73) Patentinhaber: ThyssenKrupp Steel Europe AG, 47166 Duisburg (DE)
(72) Erfinder: BECKER, Jens-Ulrik, 47058 Duisburg (DE); GERBER, Thomas, 44225 Dortmund (DE); MURA, Julia, 40880 Ratingen (DE); MYSLOWICKI, Stefan, 41238 Mönchengladbach (DE)
(74) Vertreter: thyssenkrupp Intellectual Property GmbH
(86) Internationale Anmeldenummer: PCT/EP2014/003441
(87) Internationale Veröffentlichungsnummer: WO 2015/090608

(56) Entgegenhaltungen:
- DE-A1-102007 022 453
- DE-A1-102008 022 709
- Hoesch Hohenlimburg: "22MnB5: Warmgewalztes Mittelband Werkstoffdatenblatt", ThyssenKrupp , August 2013 (2013-08), XP002726375, Gefunden im Internet: URL:http://www.hoesch-hohenlimburg.de/proj ekt/web2013/hhowebcms.nsf/www/BDCD8110DFD5 5989C1257B250049D2D4/$File/WB_20%20Mn%20B% 205%20-%20HLB%2020-Seite1%20-%201.5530.pdf [gefunden am 2014-06-27]
- U. S. Steel Kosice, s. r. o: "Micro-alloyed grade sheets - U. S. Steel Kosice, s. r. o", , 12. März 2005 (2005-03-12), XP002726391, Gefunden im Internet: URL:http://www.usske.sk/products/cat/coate d/hot-dip/microalloyed.html [gefunden am 2014-06-27]
- BSS Steel Strip: "Steel Strip Specifications", Steelstrip co. uk , 28. April 2012 (2012-04-28), XP002726392, Gefunden im Internet: URL:http://www.steelstrip.co.uk/internatio nal_equivalents.htm [gefunden am 2014-06-27]
- KARBASIAN H ET AL: "A review on hot stamping", JOURNAL OF MATERIALS PROCESSING TECHNOLOGY, Bd. 210, Nr. 15, 19. November 2010 (2010-11-19), Seiten 2103-2118, XP027378020, ELSEVIER, NL ISSN: 0924-0136 [gefunden am 2010-08-06]

## Beschreibung

Die Erfindung betrifft ein Stahlflachprodukt zur Verwendung für Bauteile in der Fahrzeugkarosserie, die durch Warmumformen und Abschrecken hergestellt werden.

Unter dem Begriff "Stahlflachprodukt" werden hier durch einen Walzprozess erzeugte Stahlbleche oder Stahlbänder sowie davon abgeteilte Platinen und desgleichen verstanden.

Sofern hier Legierungsgehalte lediglich in "%" angegeben sind, ist damit immer "Gew.-%" gemeint, sofern nicht ausdrücklich etwas anderes angegeben ist.

Die im Bereich des Automobilbaus an die Passagiersicherheit im Crashfall gestellten Anforderungen steigen immer weiter. Gleichzeitig stellt der Leichtbau eine wichtige Voraussetzung für die Einhaltung der gesetzlich vorgegebenen CO₂-Grenzwerte und für die Minimierung des zum Antrieb des Fahrzeugs benötigten Energieeinsatzes dar. Ebenso bestehen auch seitens der Nutzer von Fahrzeugen immer höhere Ansprüche hinsichtlich des Komforts, was zu einem erhöhten Anteil von elektronischen Komponenten im Fahrzeug und einem dadurch zunehmenden Fahrzeuggewicht führt. Um diese widersprüchlichen Anforderungen gleichzeitig zu erfüllen, steht seit längerem die Leichtbauweise bei der Fertigung von Karosseriestrukturen für den Automobilbau im Fokus.

Für crashrelevante Automobilbauteile haben sich hier insbesondere Bauteile durchgesetzt, die durch Warmumformen und im Anschluss daran erfolgendes Härten von Stahlflachprodukten hergestellt werden, die aus einem Mangan-Bor-Stahl bestehen. Durch diese in der Fachsprache auch als "Presshärten" bezeichnete Fertigungsmethode können Bauteile hergestellt werden, die sich trotz optimal dünner Wandstärken und damit einhergehend minimiertem Gewicht an hinsichtlich ihres Verhaltens im Falle eines Crashs besonders sensiblen Punkten einer Fahrzeugkarosserie einsetzen lassen.

Ein typisches Beispiel für einen Mangan-Bor-Stahl der voranstehend erwähnten Art ist der in der Fachwelt unter der Bezeichnung 22MnB5 bekannte Stahl, der die Werkstoffnummer 1.5528 erhalten hat. Durch eine Warmumformung und ein daran anschließend durchgeführtes Presshärten lassen sich aus Stählen dieser Art Bauteile erzeugen, die bei komplexer Geometrie optimal maßhaltig sind.

Die durch Presshärten aus MnB-Stählen gefertigten Bauteile erreichen aufgrund ihres überwiegend martensitischen Gefüges höchste Festigkeiten bei geringem Gewicht. Dabei haben sich MnB-legierte Stahlsorten bewährt, deren Zugfestigkeit Rm bei ca. 1.500 MPa und deren Dehngrenze R_{P0,2} bei ca. 1.100 MPa liegt. Ein zur Klasse der MnB-Stähle zählender, entsprechende Festigkeitswerte liefernder Stahl weist neben Eisen und erschmelzungsbedingt unvermeidbaren Verunreinigungen beispielsweise (in Gew.-%) 0,22 - 0,25 % C, 0,2 - 0,3 % Si, 1,2 - 1,4 % Mn, bis zu 0,025 % P, bis zu 0,01 % S, 0,02 - 0,05 % Al, 0,1 - 0,2 % Cr, 0,025 - 0,04 % Ti und 0,002 - 0,0035 % B auf.

Jüngere Entwicklungen zielen nun darauf ab, Stahlbauteile für den Automobilkarosseriebau zu fertigen, die noch höhere Festigkeiten erreichen. Solche Warmumformstähle mit erhöhter Festigkeit greifen auf Stahlkonzepte zurück, die vom generellen Typus her den voranstehend erläuterten MnB-Stählen ähnlich sind, jedoch höhere Kohlenstoffgehalte aufweisen, die im gehärteten Zustand zu höheren Werkstoff- bzw. Bauteilfestigkeiten führen. Diese erhöhten Werkstoff- bzw. Bauteilfestigkeiten gehen einher mit hoher Härte. Entsprechend legierte MnB-Stähle erreichen regelmäßig Zugfestigkeiten von 1700 MPa und mehr.

Insbesondere durch mechanische Schneidprozesse bei der Weiterverarbeitung von aus den hochfesten, hohe Kohlenstoffgehalte aufweisenden MnB-Stählen durch Pressformhärten erzeugten Bauteilen besteht allerdings die Gefahr, dass lokal begrenzte Eigenspannungen oder Eigenspannungsgradienten in das Bauteil eingebracht werden. Diese führen aufgrund der hohen Härte des Werkstoffes zu einer starken Empfindlichkeit gegenüber wasserstoffinduzierter Rissbildung. Aus den hochfesten Stahlgüten erzeugte Bauteile können daher nur unter genauer Kontrolle von Einbausituation und Beanspruchung erfolgen. Auch muss bei der Verarbeitung unter Umständen auf einen Beschnitt im gehärteten Zustand verzichtet oder es müssen zusätzliche Temperschritte und eine genaue Atmosphärenkontrolle im Warmumformprozess angewendet werden.

Ein weiteres Problem bei der Verarbeitung von Bauteilen, die aus Stählen mit mittleren bis hohen Kohlenstoffgehalten hergestellt sind, entsteht durch ihre reduzierte Verschweißbarkeit. Die verminderte Schweißeignung zeigt sich insbesondere in einer vergleichbar geringen Belastbarkeit der zum Verschweißen von artgleichen oder unterschiedlichen Stahlsorten gesetzten Schweißpunkte. Bedingt durch die relative Schwäche der Schweißpunkte können die Bauteile nicht ihre gesamte Festigkeit ausspielen.

Aus der DE 10 2008 022 709 A1 ist bereits bekannt, dass Bauteile für Fahrzeugkarosserien aus durch Walzplattieren erzeugten Verbundwerkstoffen hergestellt werden können, bei denen einzelne aus unterschiedlichen Stählen bestehende Lagen so miteinander kombiniert werden, dass der Verbundwerkstoff bzw. das daraus hergestellte Bauteil Eigenschaften erhält, die ein Bauteil, das aus einem aus einem einheitlichen Stahl bestehenden Stahlflachprodukt geformt wird, nicht erreichen würde. So lässt sich gemäß diesem Stand der Technik beispielsweise ein gut umformbarer, rissunempfindlicher Stahl als Decklage mit einem hochfesten MnB-Stahl kombinieren, um daraus eine B-Säule oder ein vergleichbares Karosseriestrukturelement zu formen. Der Werkstoff der Decklage kann dabei so ausgewählt werden, dass die Kernlage die erforderliche Festigkeit bereitstellt und die Decklage die Kernlage gegen wasserstoffinduzierte Rissbildung schützt sowie eine ausreichende Schweißbarkeit bereitstellt. Allerdings beschränkt sich dieser Stand der Technik auf die Verwendung konventioneller Stähle als Werkstoff für die Kernlage, die im Festigkeitsbereich von bis zu 1500 MPa liegen.

Vor dem Hintergrund des voranstehend erläuterten Standes der Technik bestand die Aufgabe der Erfindung darin, ein für die Herstellung von Bauteilen für Kraftfahrzeugkarosserien durch Presshärten besonders geeignetes Stahlflachprodukt zu nennen, das bei weiter erhöhter Festigkeit unempfindlich ist gegen Rissbildung und eine für die Einbindung in eine Schweißkonstruktion ausreichende Schweißeignung besitzt.

Ebenso sollte ein entsprechend beschaffenes Bauteil für eine Fahrzeugkarosserie und eine ein solches Bauteil umfassende Karosserie geschaffen werden, bei der eine hochbelastbare Verbindung des betreffenden Bauteils mit den angrenzenden Bauteilen gewährleistet ist.

In Bezug auf das Stahlflachprodukt ist diese Aufgabe erfindungsgemäß dadurch gelöst worden, dass ein solches Stahlflachprodukt die in Anspruch 1 angegebenen Merkmale besitzt.

Generell lässt sich ein Bauteil durch Warmformen und anschließendes Härten eines erfindungsgemäß ausgebildeten Stahlflachprodukts herstellen.

Eine Karosserie für ein Kraftfahrzeug weist ein solches Bauteil auf, das mit mindestens einem weiteren Bauteil der Karosserie durch Schweißen verbunden ist.

Vorteilhafte Ausgestaltungen der Erfindung sind in den abhängigen Ansprüchen angegeben und werden nachfolgend, wie der allgemeine Erfindungsgedanke im Einzelnen erläutert.

Ein erfindungsgemäßes Stahlflachprodukt umfasst somit in Übereinstimmung mit dem oben erwähnten Stand der Technik eine Kernlage und eine Decklage, die stoffschlüssig mit der Kernlage verbunden ist.

Erfindungsgemäß besteht nun die Kernlage aus einem mit Mn, B und mindestens 0,3 Gew.-% C legierten Stahl mit einer Zusammensetzung wie in Anspruch angegeben, der eine Zugfestigkeit von mindestens 1700 MPa im fertig gehärteten Zustand aufweist.

Die stoffschlüssig mit der Kernlage verbundene Decklage weist dagegen einen deutlich niedrigeren C-Gehalt von höchstens 0,09 Gew.-% und eine Zusammensetzung wie in Anspruch 1 auf. Damit einhergehend beträgt auch im Bereich der Decklage die Zugfestigkeit des erfindungsgemäßen Stahlflachprodukts höchstens die Hälfte der Zugfestigkeit des Stahls der Kernlage im fertig gehärteten Zustand. Gleichzeitig weist das erfindungsgemäße Stahlflachprodukt im Bereich seiner Decklage eine Dehnung A80 auf, die mindestens dem 1,5-fachen der Dehnung A80 der Kernlage im fertig gehärteten Zustand entspricht.

Die Erfindung kombiniert somit als Werkstoff für die Kernlage einen Stahl, dessen Festigkeit durch einen hohen C-Gehalt gegenüber dem Stand der Technik deutlich angehoben ist, mit einem gut verformbaren, für die Decklage bestimmten Stahl, dessen C-Gehalt so abgesenkt ist, dass er einerseits eine optimale, durch eine vergleichbar niedrige Festigkeit und hohe Dehnwerte charakterisierte Verformbarkeit besitzt und sich andererseits besonders gut mit anderen Stahlbauteilen zu einer Karosseriestruktur verschweißen lässt.

Die Erfindung stellt auf diesem Wege eine Möglichkeit zur Verfügung, hochfeste MnB-Stähle, die hohe C-Gehalte und damit einhergehend eine hohe Zugfestigkeit und Härte besitzen, einer breiteren Verwendung im

Fahrzeugkarosseriebau zugänglich zu machen. Das der Erfindung zugrundeliegende Lösungsprinzip beruht dabei auf einem schichtförmigen Aufbau des erfindungsgemäßen Stahlflachprodukts. An der Oberfläche (Decklage) liegt eine geringere Festigkeit (Härte) vor, die Kernlage besteht dagegen aus einem hochfesten Stahl im nach dem Warmpresshärten erhaltenen Zustand.

Die weichere Oberflächenschicht (Decklage) ist primär unempfindlicher gegen Rissinitiierung, da der Werkstoff hier aufgrund seiner geringeren Härte eine reduzierte Kantenrissempfindlichkeit bzw. Kerbempfindlichkeit aufweist. Hierdurch ist der erfindungsgemäße Verbundwerkstoff weniger empfindlich gegenüber dem Phänomen des "Delayed Fracture's", einem in Folge von Wasserstoffeinlagerung an Oberflächenrissen eintretenden verzögerten Bruch eines aus dem erfindungsgemäßen Stahlflachprodukt gefertigten Bauteils. Ein "Delayed Fracture" tritt auf, insofern der Werkstoff einem korrosiven Medium ausgesetzt ist. Die Delayed Fracture Empfindlichkeit steigt grundsätzlich mit der Festigkeit des Werkstoffs an. In der vorliegenden Erfindung schirmt die gegen Delayed Fracture unempfindlichere Decklage den empfindlicheren Kern gegenüber dem korrosiven Medium ab. Durch den höchstfesten Kern ergeben sich dabei Werkstoffe, die in ihrer Gesamtfestigkeit höher liegen als die Verbundwerkstoffe, die auf Grundlage von konventionellen MnB-Stählen gefertigt sind. Eine weitere Bedingung für einen "Delayed Fracture" besteht im Auftreten eines kritischen Spannungszustands des beanspruchten Materials. Bei einer Beanspruchung des Werkstoffs z.B. durch Biegung ist die Oberflächenschicht einer größeren Spannung als der Kern ausgesetzt. In einem erfindungsgemäßen Werkstoffverbund können die an der Oberfläche auftretenden Spannungen durch Einsatz einer weicheren Decklage leichter abgebaut werden als in der festeren Kernlage, was eine geringere Delayed Fracture Empfindlichkeit des Werkstoffverbundes im Vergleich zum Werkstoff der Kernlage bewirkt.

Des Weiteren führen die weichen Außenschichten zu besseren Umformeigenschaften. Durch die erfindungsgemäß vorgesehene weiche, geringe Festigkeiten und eine hohe Dehnung aufweisenden Randschichten können höhere Biegewinkel im statischen Plättchenbiegetest (VDA 230-100) erreicht werden. Beide Aspekte sind bei Crashbeanspruchungen von Bedeutung und verzögern die Rissinitierung sowie Risseinleitung, wodurch eine insgesamt höhere Energieaufnahme im Fall eines Crashs erreicht wird.

Neben der Vermeidung von Rissen trägt der erfindungsgemäße Schichtaufbau eines Verbundwerkstoffs zur Verbesserung der Schweißbarkeit bei. Hier zeigt sich, dass es aufgrund des geringen C-Gehalts der Deckschicht eines erfindungsgemäßen Stahlflachprodukts nicht zu der bei MnB-Stählen mit hohen C-Gehalt andernfalls eintretenden Versprödung und damit einhergehenden Schwächung der Schweißverbindungen solcher Warmumformstähle kommt. Um diesen Effekt zu gewährleisten, hat der Stahl der Decklage einen C-Gehalt von höchstens 0,09 Gew.-%, bevorzugt von weniger als 0,07 %. Stähle dieser Art sind an sich bekannt. Bei ihnen handelt es sich beispielsweise um konventionelle IF-Stähle oder Stähle, die unter der Handelsbezeichnung "DC03" und "H340" bekannt sind, bis hin zu Complexphasenstählen.

In der vorliegenden Erfindung bezeichnet der Begriff "Verbundwerkstoff" ein mehrschichtiges Stahlflachprodukt, welches auch als Werkstoffverbund bezeichnet wird.

Durch den mehrschichtigen Aufbau des erfindungsgemäßen Stahlflachproduktes erfolgt beim Schweißen die Anbindung der Schweißlinse an ihre Umgebung im Bereich des Übergangs von der äußeren weichen und zur harten Kernlage. Durch Einhaltung einer ausreichenden Dicke der Decklage, d. h. durch eine geeignete Wahl des Verhältnisses von Dicke der Auflage zur Dicke des Kerns, kann dementsprechend eine positive Beeinflussung der Schweißqualität einerseits (Prozess) und der Belastbarkeit der fertigen Schweißverbindung im Sinne einer maximalen Kraftübertragung andererseits erreicht werden.

Der Einsatz eines erfindungsgemäß mehrlagigen, mit einer kohlenstoffarmen, sehr gut schweißbaren Decklage versehenen Stahlflachprodukts zieht zwar ein Absinken der Festigkeit des erfindungsgemäßen Stahlflachprodukts im Vergleich zu einem Stahlflachprodukt nach sich, das ausschließlich aus dem Stahl der Kernlage gefertigt ist. Jedoch hat sich überraschend gezeigt, dass die Gesamtfestigkeit eines aus einem erfindungsgemäßen Stahlflachprodukt gefertigten Bauteils trotz der Kombination mit einem weichen, wenig festen Decklagen-Werkstoff immer noch deutlich über der Festigkeit eines Bauteils liegt, das aus einem konventionellen hochfesten MnB-Stahl gefertigt ist.

Um ausreichend hohe Festigkeiten des Stahls der Kernlage im gehärteten Zustand zu gewährleisten, weist der für die Kernlage erfindungsgemäß vorgesehene Stahl mindestens 0,3 Gew.-% auf, was sich im Hinblick auf die angestrebte Festigkeit als vorteilhaft erweist.

Die Erfindung stellt so ein Stahlflachprodukt zur Verfügung, bei dem eine hohe Festigkeit und ein hohes Umformvermögen mit einer guten Schweißeignung und einer geringen Rissempfindlichkeit gepaart sind. Die Erfindung beseitigt so die im Stand der Technik bisher bestehenden Einschränkungen der Verwendung von höchstfesten MnB-Stählen mit C-Gehalten von mindestens 0,3 Gew.-%.

Das Dickenverhältnis von Decklage zu Kernlage kann abhängig davon gesetzt werden, welche Eigenschaft des erfindungsgemäßen Stahlflachprodukts in den Vordergrund gestellt werden soll. Erfindungsgemäß nimmt die Kernlage 40 - 95 % der Dicke des Stahlflachprodukts ein. Die Kernlage sollte grundsätzlich dicker sein als eine einzelne Decklage. Soll eine maximale Festigkeit bei guter Verformbarkeit und ausreichendem Schutz gegen Rissbildung gewährleistet werden, so wird dies dadurch erreicht, dass die Kernlage 70 - 95 % der Dicke des Stahlflachprodukts einnimmt, die Decklage im Verhältnis zur Kernlage also vergleichsweise dünn ist. Soll dagegen eine optimierte Schweißbarkeit gewährleistet werden, so hat es sich als zweckmäßig erwiesen, wenn die Kernlage 60 - <70 % der Dicke des Stahlflachprodukts einnimmt. Die Decklage ist in diesem Fall dicker, so dass für den Schweißvorgang vergleichbar viel Volumen an weichem, kohlenstoffarmen und damit wenig versprödungsanfälligem Stahl der Decklage zur Verfügung steht. Die Gesamtblechdicke, d.h. die Summe der Dicken der Kernlage und der Decklage, eines erfindungsgemäßen Stahlflachproduktes beträgt typischerweise zwischen 0,3 mm bis 8 mm, bevorzugt von 0,5 mm bis 3,5 mm. Erfindungsgemäß weist der für die Kernlage eines erfindungsgemäßen Stahlflachprodukts verwendete Stahl für sich gesehen eine Zugfestigkeit von mindestens 1700 MPa auf.

Optimale Verformungseigenschaften eines erfindungsgemäßen Stahlflachprodukts ergeben sich dann, wenn die Zugfestigkeit der Decklage höchstens einem Drittel der Zugfestigkeit der Kernlage entspricht. Ein für die Decklage besonders geeigneter, 0,08 Gew.-% C enthaltender Stahl weist hier beispielsweise bei einer Dehnung A80 von mindestens 21 % eine Zugfestigkeit von 400 - 500 MPa und eine Streckgrenze von 340 - 420 MPa auf.

Um die gewünschte Verformbarkeit bei gleichzeitig sicherem Schutz gegen Rissbildung zu gewährleisten, kann die Dehnung A80 der Decklage mindestens doppelt so hoch sein wie die Dehnung A80 der Kernlage im fertig gehärteten Zustand.

Die Decklage kann durch Walzplattieren auf die Kernlage aufgebracht werden. Ein hierzu geeignetes Verfahren ist beispielsweise in der DE 10 2005 006 606 B3 beschrieben, deren Inhalt zwecks Erläuterung der beim Walzplattieren vom Fachmann üblicherweise absolvierten Arbeitsschritte in die vorliegende Anmeldung einbezogen wird.

Sollen über die Stahlflachproduktdicke hin symmetrische Eigenschaften eingestellt werden, kann dies durch einen symmetrischen Aufbau der eingesetzten Stahllagen erreicht werden. Als produktionstechnisch besonders sicher zu handhaben hat sich ein dreilagiger Aufbau erwiesen, bei welchem die Kernlage von jeweils einer Decklage ober- und einer Decklage unterhalb der Kernlage bedeckt ist. Bestehen die Decklagen dabei aus Stahllagen gleicher Dicke und Zusammensetzung, ist dies von Vorteil für die Vereinfachung der Prozessführung.

Erfindungsgemäß besteht ein für die Kernlage in der Praxis einsetzbarer Stahl neben Eisen und herstellungsbedingt unvermeidbaren Verunreinigungen aus (in Gew.-%)
C: 0,3 - 0,5 %, insbesondere 0,3 - 0,45 %,
Si: 0,150 - 0,350 %, insbesondere 0,2 - 0,28 %,
Mn: 1,100 - 1,400 %, insbesondere 1,15 - 1,3 %,
Al: 0,020 - 0,050 %, insbesondere 0,03 - 0,04 %,
Cr: 0,100 - 0,500 %, insbesondere 0,14 - 0,45 %,
Ti: 0,020 - 0,040 %, insbesondere 0,026 - 0,034 %,
B: 0,002 - 0,004 %, insbesondere 0,002 - 0,003 %.
Zu den Verunreinigungen zählen dabei P: bis zu 0,020 %,
S: bis zu 0,003 %, Cu: bis zu 0,100 %, Mo: bis zu 0,050 %, N: bis zu 0,007 %, Ni: bis zu 0,100 %, Nb: bis zu 0,003 %, V: bis zu 0,010 %, Sn: bis zu 0,030 %, Ca: bis zu 0,005 %.

Die Decklage eines erfindungsgemäßen Stahlflachprodukts besteht dagegen aus einem Stahl, der neben Eisen und herstellungsbedingt unvermeidbaren Verunreinigungen (in Gew.-%)
C: bis zu 0,09 %, insbesondere 0,002 - 0,075,
Si: bis zu 0,7 %, insbesondere 0,01 - 0,6 %,
Mn: 0,10 - 1,9 %, insbesondere 0,13 - 1,8 %,
Al: bis zu 0,06 %, insbesondere 0,03 - 0,04 %,
Cr: 0,025 bis zu 0,4 %, insbesondere 0,025 - 0,35 %,
Nb: bis zu 0,025 %, insbesondere 0,002 - 0,02 %,
Ti: bis zu 0,13 %, insbesondere 0,002 - 0,12 %,
enthält. Zu den Verunreinigungen zählen dabei P: bis zu 0,025 %, S: bis zu 0,015 %, Cu: bis zu 0,15 %, Mo: bis zu 0,05 %, N: bis zu 0,006 %, Ni: bis zu 0,15 %, V: bis zu 0,02 %, B: bis zu 0,001 %, Sn: bis zu 0,04 % und Ca: bis zu 0,003 %.

Kohlenstoff ist ein Legierungselement, welches in besonderer Weise festigkeitssteigernd wirkt, in dem mit zunehmendem Gehalt und steigender Abkühlgeschwindigkeit die Neigung zur Bildung von spezifisch harten Gefügebestandteilen wie Perlit, Bainit und Martensit unmittelbar gesteigert wird. Durch den Kohlenstoffgehalt kann die Festigkeit insbesondere der Kernlage beeinflusst werden. Um hohe Festigkeitswerte der Kernlage zu erreichen, kann der Kohlenstoffgehalt der Kernlage auf Werte von mindestens 0,3 Gew.-% eingestellt werden. Der Kohlenstoffgehalt der Kernlage kann auf maximal 0,5 Gew.-%, insbesondere 0,45 Gew.-%, beschränkt werden, um die Sprödigkeit des Stahls der Kernlage und den negativen Einfluss auf das Schweißverhalten zu begrenzen. Eine mit zunehmendem Kohlenstoffgehalt steigende Festigkeit geht immer einher mit einem Verlust an Umformbarkeit, einer sich verstärkenden Neigung zu Risseinleitung und Rissfortschritt beziehungsweise einer zunehmenden Neigung zu wasserstoffinduzierter Rissbildung durch die Erhöhung der Eigenspannungen im Gefüge bei Bildung bainitischmartensitischer Bestandteile. Um eine Deckschicht mit erfindungsgemäßen Dehnungseigenschaften sicherzustellen, kann der C-Gehalt des Stahls der Decklage auf bis zu 0,09 Gew.-% begrenzt werden. In diesem Fall kann für den Stahl der Decklage mit einer im Wesentlichen ferritischperlitischen Gefügeausbildung gerechnet werden.

Silizium ist ein Legierungselement, welches zur Mischkristallhärtung und zur Festigkeitssteigerung beiträgt und in konventionellen höherfesten Stählen wie mikrolegierten Stählen gemäß DIN EN 10268 (2013-12), wie HC300LA-HC500LA, Anwendung findet. Ein Beispiel eines angewendeten Stahlkonzepts ist HC340LA mit der Werkstoffnummer 1.0548. Diese Stähle sind kaltumformbar und eignen sich besonders gut als Werkstoff für die Decklage des erfindungsgemäßen Stahlflachprodukts. Der Si-Gehalt der für die Decklage des erfindungsgemäßen Stahlflachprodukts eingesetzten Stähle kann auf maximal 0,7 Gew.-% beschränkt werden, um eine Beeinträchtigung der Beschichtbarkeit der Stahlflachprodukte in Schmelztauchveredelungsprozessen durch Bildung oberflächennaher Oxide zu vermeiden. Der Si-Gehalt der für die Kernlage eingesetzten Stähle beträgt mindestens 0,150 Gew.-% und höchstens 0,350 Gew.-%, um das Umwandlungsverhalten vorteilhaft zu beeinflussen. Si-Gehalte von mindestens 0,150 Gew.-% haben einen positiven Einfluss hinsichtlich der Vermeidung der Zementit- und Perlitbildung beim Abkühlen. Mit steigendem Si-Gehalt kommt es zu einer Erhöhung der A3-Umwandlungstemperatur. Damit steigt bei verhältnismäßig niedrigen Ofentemperaturen das Risiko, keine vollständige Austenitisierung zu erreichen und damit die Härtbarkeit einzuschränken. Deshalb werden im vorliegenden Fall keine Gehalte oberhalb von 0,350 Gew.-% angewendet.

Mangan als Legierungselement trägt zur Mischkristallhärtung des Stahls bei. Durch steigende Mn-Gehalte kann insbesondere die Zugfestigkeit gesteigert werden. Durch Zugabe von Mangan kann auch die Härtbarkeit des Stahls gesteigert werden, indem die A3-Temperatur abgesenkt und die Bildung der diffusionsgesteuerten Umwandlungsphasen Ferrit, Perlit und Bainit zu längeren Zeiten verschoben und somit die Umwandlung in die Martensitstufe auch bei verhältnismäßig niedrigen Abkühlungsgeschwindigkeiten erleichtert wird. Stähle, die für die Kernlage eingesetzt werden, weisen zur Verbesserung der Härtbarkeit Mn-Gehalte von mindestens 1,100 Gew.-% auf. Die Mn-Gehalte der Stähle, die für die Kernlage eingesetzt werden, können aus Kostengründen auf Werte bis zu 1,400 Gew.-% begrenzt werden, da Mn-Gehalte oberhalb von 1,400 Gew.-% nicht mehr zur Beeinflussung des Umwandlungsverhaltens der Kernlage erforderlich sind. Stähle, die für die Decklage eingesetzt werden, weisen zur Verbesserung der Festigkeit mindestens 0,10 Gew.-% Mangan auf. Sie sollten nicht mehr als 1,9 Gew.-% Mangan aufweisen, weil sich Mn-Gehalte oberhalb von 1,9 Gew.-% negativ auf die Schmelztauchbeschichtungseigenschaften des erfindungsgemäßen Stahlflachprodukts auswirken. Aluminium wird zur Desoxidation des schmelzflüssigen Stahls, der sowohl für die Kernlage als auch die Decklage eingesetzt wird, verwendet. Daneben trägt Aluminium zur Kornfeinung bei. Aluminiumgehalte oberhalb von 0,06 Gew.-% in der Decklage erhöhen die Häufigkeit des Auftretens und die Größe nichtmetallischer Einschlüsse, was zur Bildung von Oberflächendefekten beiträgt.

Chrom weist einen auf die Austenitumwandlung verzögernden Einfluss auf und erhöht die Durchhärtbarkeit der einsetzbaren Stähle. In Stählen, die als Kernlage eingesetzt werden, gewährleistet ein Chromgehalt von mindestens 0,100 Gew.-% die erwünschte Auswirkung auf die Umwandlung. Der Cr-Gehalt sollte jedoch 0,500 Gew.-% nicht überschreiten, da die umwandlungsbeeinflussende Auswirkung bis zu diesen Gehalten ausreichend ist und kostengünstig umgesetzt werden kann. Auch in der Decklage ist es vorteilhaft, die Festigkeit gezielt über die Umwandlungsbeeinflussung durch Chrom einzustellen und zu steuern. Allerdings ist dies in geringerem Umfang zweckmäßig als für die Kernlage. Insofern können auch Werkstoffkonzepte Einsatz finden, bei denen Chrom zulegiert wird und zur Umwandlungssteuerung eingesetzt wird. Für die Decklage spielt darüber hinaus die Benetzbarkeit der Stahloberfläche während des Schmelztauchbeschichtungsprozesses ebenfalls eine begrenzende Rolle. Deshalb sollte der Cr-Gehalt insbesondere 0,40 Gew.-% nicht überschreiten. Für die Decklage können darüber hinaus Stähle eingesetzt werden, die keine Cr-Zulegierung erhalten. Deshalb wird insbesondere eine Untergrenze von 0,025 Gew.-% festgelegt, die dem Restgehalt einer erschmelzungsbedingten Verunreinigung entspricht.

Titan als Legierungselement wird häufig, insbesondere bei hochfesten Mangan-Bor-Stählen für die Warmumformung, in Verbindung mit Bor eingesetzt. Titan dient zur sicheren Abbindung von Stickstoff in Form von Titannitrid (TiN), wobei die Bildung von TiN aufgrund der thermodynamischen Verhältnisse bereits bei sehr hohen Temperaturen von circa 1400 °C und darüber im teilweise schmelzflüssigen Zustand stattfindet. Hierdurch wird die Ausscheidung von BN vermieden und freies Bor kann wirksam werden hinsichtlich der Verzögerung insbesondere der Ferrit- und der Perlitumwandlung, das heißt zur Verbesserung der Härtbarkeit. Durch diese Mechanismen kann eine einfache und kostengünstige Einstellung einer möglichst hohen Härte des Kernwerkstoffs bewerkstelligt werden. Die Kernlage sollte mindestens 0,020 Gew.-% Titan aufweisen, um eine sichere Abbindung des Stickstoffs zu gewährleisten. Die Kernlage muss nicht mehr als 0,040 Gew.-% Titan aufweisen, weil mehr als 0,040 Gew.-% Ti-Zulegierung zum Zweck der TiN-Bildung bei maximal 0,007 Gew.-% Stickstoff nicht nötig sind. Bei dem für die Decklage eingesetzten Stahl können unterschiedliche, im Vergleich zur Kernlage weichere Stähle eingesetzt werden. Unter weichen Stählen sind dabei Stähle mit Zugfestigkeiten von kleiner oder gleich 750 MPa, insbesondere kleiner oder gleich 500 MPa zu verstehen. Beispiele für solche Stähle sind mikrolegierte Stähle wie HC300LA oder weiche, unlegierte Stähle wie DC01 - DC04 oder IF-Stähle wie DC05 - DC07 gemäß DIN EN 10268 (2013-12). Die für die Decklage einsetzbaren Stähle benötigen daher je Konzept keine gezielte Titan-Zulegierung, insofern kann der Titanmindestgehalt auf den Restgehalt einer erschmelzungsbedingten Verunreinigung in Höhe von 0,002 Gew.-% Titan festgesetzt werden. Für die Decklage können auch weiche IF-Stähle eingesetzt werden, bei welchen Titan zur Abbindung interstitiell gelöster Elemente wie Stickstoff und Kohlenstoff sowie ergänzend zur Erhöhung der Feinkörnigkeit und Korngrößenstabilität eingesetzt wird. Mit steigendem Titangehalt wächst der Verformungswiderstand beim Walzen, was sich ungünstig auf die Walzleistung auswirkt und die Rekristallisationsfähigkeit des Stahls wird eingeschränkt. Deshalb beträgt der Titangehalt der Decklage maximal 0,13 Gew.-%. Insbesondere ist es aus Kostengründen vorteilhaft, wenn der Titangehalt der Decklage maximal 0,12 Gew.-% beträgt.

Niob kann in IF-Stählen zur Abbindung von Stickstoff und Kohlenstoff eingesetzt werden. Sollen für die Decklage weiche IF-Stähle eingesetzt werden, ist es zur Abbindung von Stickstoff und Kohlenstoff zweckmäßig, Niob bis zu 0,025 Gew.-% hinzu zu legieren. In Fällen, in denen für die Decklage mit Aluminium beruhigte Stähle eingesetzt werden, kann auf ein Zulegieren von Niob verzichtet werden.

Bor verbessert die Härtbarkeit geeigneter Werkstoffe beim Presshärten. Unter geeigneten Werkstoffen werden in erster Linie Vergütungsstähle wie sie beispielsweise in der DIN EN 10083, Teil 2 und 3 beschrieben sind, verstanden. Ein Beispiel für einen Vergütungsstahl ist der 38MnB5 mit der Werkstoffnummer 1.5532. Um den Effekt der Umwandlungsverzögerung in einem für die Kernlage eingesetzten Stahl zu erreichen, sind Gehalte von mindestens 0,002 Gew.-% Bor notwendig. Wenn mehr als 0,004 Gew.-% Bor zulegiert wird, kommt es zu einem Sättigungseffekt, das heißt, dass auch bei weiterer Erhöhung des Bor-Gehalts keine signifikante Verstärkung der Härtbarkeit mehr festgestellt werden kann. Da gleichzeitig auch die Anfälligkeit zur Warmrissigkeit mit zunehmendem Bor-Gehalt ansteigt, kann ein Zulegieren von Bor bis maximal 0,004 Gew.-% zur Verringerung der Warmrissneigung beitragen. Besonders sicher können durch Bor induzierte Warmrisse in für die Kernlage eingesetzten Stählen bei Bor-Gehalten von maximal 0,003 Gew.-% vermieden werden.

Nachfolgend wird die Erfindung anhand von Ausführungsbeispielen näher erläutert. Es zeigen:
- Fig. 1: ein Diagramm, in dem die Zugfestigkeiten von aus konventionellen Stahlflachprodukten und erfindungsgemäßen Stahlflachprodukten durch Warmpressformhärten erzeugten Bauteilproben aufgeführt sind;
- Fig. 2: ein Diagramm, in dem für aus einem konventionellen Stahlflachprodukt und zwei Stahlflachprodukten durch Warmpressformhärten erzeugte Bauteilproben die Ergebnisse der gemäß SEP 1220 durchgeführten Prüfung einer von einer Schweißstelle bis zum Bruch aufgenommenen Scherzugkräfte verzeichnet sind;
- Fig. 3: die Ergebnisse gemäß DIN EN ISO 7539-2 durchgeführten Prüfung der verzögerten Rissbildung ("Delayed Fracture") bei Bauteilproben, die aus einem konventionellen Stahlflachprodukt und zwei erfindungsgemäßen Stahlflachprodukten hergestellt sind.

Aus in konventioneller Weise erzeugten, im Handel erhältlichen Stahlflachprodukten A1 - A4 und K1 - K4 sind durch Walzplattieren als Werkstoffverbund ausgebildete Stahlflachprodukte V1, V2, V3, V3*, V4*, V4, V5, V5*, V6, V7, V7* und V8 erzeugt worden. Die jeweilige Zusammensetzung der aus weichen Stählen bestehenden Stahlflachprodukte A1 - A4 und der aus hochfesten Stählen bestehenden Stahlflachprodukte K1 - K4 sind in Tabelle 1 angegeben.

In Tabelle 2 ist vermerkt, welches Stahlflachprodukt A1 - K4 die jeweilige Kernlage KL, welches Produkt die jeweilige Außenlagen AL gebildet hat und welchen Anteil A-KL die Kernlage KL an der Dicke des jeweiligen Verbundwerkstoff-Stahlflachprodukts V1 - V8 hatte. Der Bereich der Zugfestigkeiten Rm, die für die jeweils aus den Verbundwerkstoff-Stahlflachprodukten V1 - V8 pressformgehärteten Bauteile ermittelt werden konnte, ist in Tabelle 2 zusätzlich angegeben.

Für das Walzplattieren sind Blechzuschnitte der miteinander kombinierten Stahlflachprodukte A1 - K4 zu Stapeln aufeinander gelegt worden, bei denen jeweils eine Kernlage KL zwischen zwei Außenlagen AL angeordnet war. Dabei wurden für die beiden Außenlagen jeweils Stahlflachprodukte gleicher Zusammensetzung und Dicke verwendet. Die Blechzuschnitte sind zuvor mindestens an ihren im Stapel am jeweils benachbarten Blechzuschnitt anliegenden Oberfläche gereinigt und so mechanisch bearbeitet worden, dass ein weitestgehend vollflächiger Kontakt gewährleistet war. Die Blechzuschnitte der jeweiligen Stapel sind anschließend miteinander verschweißt worden. Der so gebildete feste Verbund ist in ein oder mehreren Stufen zu einem Verbundwerkstoff-Stahlflachprodukt mit einer Dicke von beispielsweise 3 mm warmgewalzt worden. Abschließend kann das erhaltene Verbundwerkstoff-Stahlflachprodukt noch einem Kaltwalzen unterzogen werden, um seine Dicke weiter zu reduzieren. Der beim Walzplattieren eingehaltene Verfahrensablauf ist im Einzelnen in der DE_10 2005 006 606_B3 beschrieben, deren Inhalt zum Zwecke der Erläuterung in die vorliegende Anmeldung einbezogen wird.

Aus den so gewonnenen Verbundwerkstoff-Stahlflachprodukten V1 - V8 sind Platinen abgeteilt und durch Presshärten zu identisch geformten Stahlbauteilen umgeformt worden. Dazu sind die aus den Verbundwerkstoffen V1 - V8 bestehenden Platinen auf eine oberhalb der höchsten Austenitisierungstemperatur der Stähle der jeweils miteinander kombinierten Stahlflachprodukte A1 - A4, K1 - K4 erwärmt worden. Die dabei erreichten Temperaturen lagen typischerweise im Bereich von ca. 900 - 950 °C. Anschließend sind die Platinen in einem gekühlten Pressformwerkzeug umgeformt worden. Im Zuge der Umformung erfolgte im Pressformwerkzeug eine schnelle Abkühlung mit einer Abkühlrate von mindestens 27 K/s, beispielsweise 27 - 30 K/s, so dass in den aus den Platinen fertig pressgeformten Probenbauteilen Härtungsgefüge vorlag. Das Härtungsgefüge der Verbundwerkstoffe bestand in der Kernlage vollständig aus Martensit, wohingegen die Außenlagen maximal 40 Vol-% Martensit aufwiesen.

Zum Vergleich sind durch in derselben Weise durchgeführtes Presshärten aus den Stahlflachprodukten A1 - K4 jeweils Probenbauteile erzeugt worden, deren Form ebenfalls den aus den Verbundwerkstoff-Stahlflachprodukten V1 - V8 hergestellten Bauteilen entsprach. An den aus den Stahlflachprodukten A1 - K4 erzeugten Probenbauteilen wurden die Zugfestigkeit Rm und Dehnung A80 im gehärteten Zustand gemäß DIN EN ISO 6892-1 ermittelt und in Tabelle 1 eingetragen.

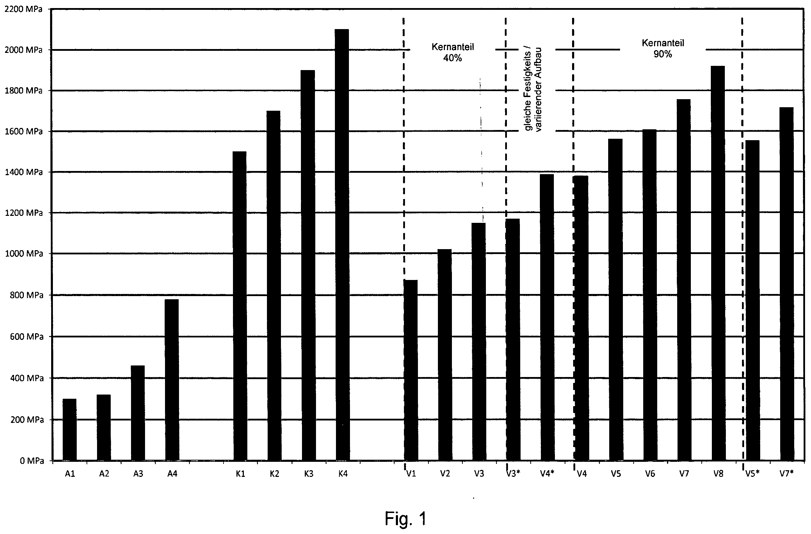

Wie aus Fig. 1 ersichtlich, konnte durch die Wahl des Dickenanteils der jeweils aus hochfestem Stahl bestehenden Kernlage KL die Festigkeit des jeweiligen Stahlflachprodukten V1 - V8 direkt beeinflusst werden. Die Festigkeit der erfindungsgemäßen Bauteile lag dabei stets oberhalb der maximalen Festigkeit der aus den weichen Stählen A1 - A4 bestehenden Bauteile.

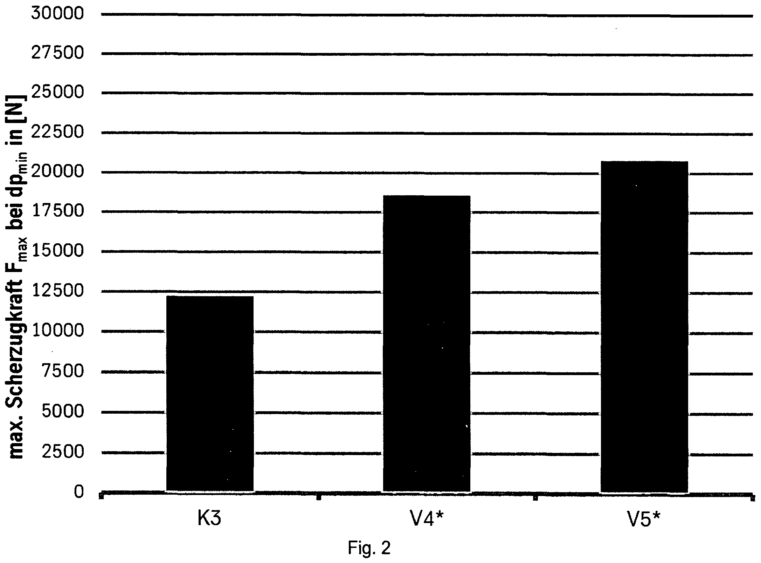

In Fig. 2 sind die Ergebnisse einer gemäß SEP 1220 durchgeführten Scherzugkraftprüfung wiedergegeben, die an verschweißten, durch Warmpressformhärten hergestellten Bauteilproben durchgeführt worden sind. Eine Gruppe der untersuchten Bauteilproben bestand dabei aus dem konventionellen Stahlflachprodukt K3, eine aus dem Stahlflachprodukt V4* und eine weitere aus dem erfindungsgemäßen Stahlflachprodukt V5*. Die Versuche zeigen, dass die Verschweißungen bei der aus dem erfindungsgemäßen Stahlflachprodukt V5* erzeugten Bauteilprob jeweils Scherzugkräfte erträgt, die deutlich über den Scherzugkräften liegen, welchen von den Verschweißungen der aus den Stahlflachprodukten K3 und V4* bestehenden Bauteilprobe ertragen werden.

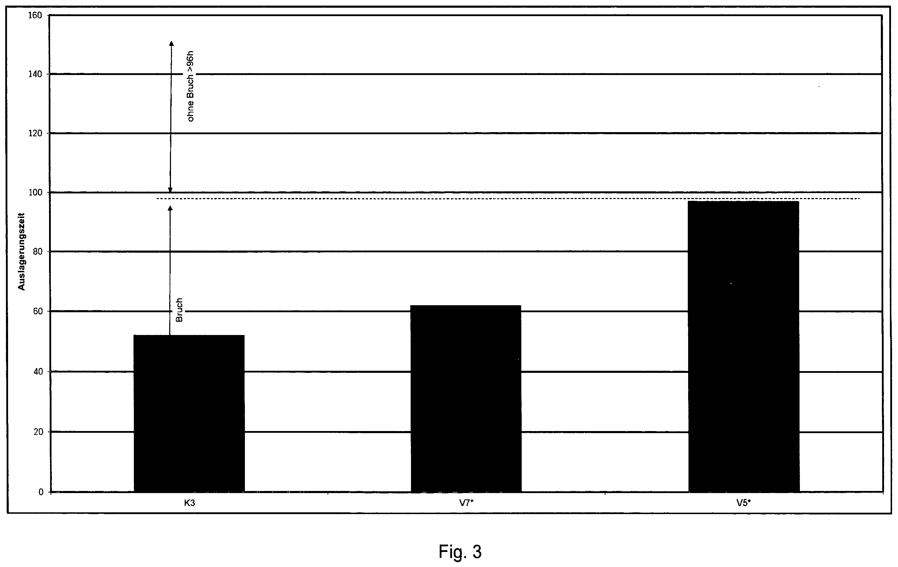

In Fig. 3 sind die Ergebnisse von gemäß DIN EN ISO 7539-2 unter Auslagerung in einem korrosiven Medium durchgeführten Vierpunkt-Biegeversuchen dargestellt, die an durch Warmpressformhärten hergestellten Bauteilproben durchgeführt worden sind. Eine Gruppe der untersuchten Bauteilproben bestand dabei aus dem konventionellen Stahlflachprodukt K3, eine aus dem erfindungsgemäßen Stahlflachprodukt V5* und eine weitere aus dem ebenfalls erfindungsgemäßen Stahlflachprodukt V7*. Auch hier erwiesen sich die aus erfindungsgemäßen Stahlflachprodukten erzeugten Bauteilproben der aus dem Stahlflachprodukt K3 erzeugten Probe deutlich überlegen. So kam es bei den aus dem Stahlflachprodukt K3 bestehenden Bauteilproben bereits nach einer Auslagerungszeit von 52 Stunden zur Rissbildung, während der Bruch bei der aus dem erfindungsgemäßen Stahlflachprodukt V7* bestehenden Bauteilprobe erst nach 62 Stunden und bei der aus dem erfindungsgemäßen Stahlflachprodukt V5* bestehenden Bauteilprobe bis zu 97 Stunden kein Bruch eintrat.

**Tabelle 1**

| | **C** | **Si** | **Mn** | **P** | **S** | **Al** | **Cr** | **Nb** | **Ti** | **B** | **Rm [MPa]** | **A80 [%]** | |
|---|---|---|---|---|---|---|---|---|---|---|---|---|---|
| **A1** | 0,0030 | 0,020 | 0,130 | 0,010 | 0,0120 | 0,0325 | 0,0500 | 0,0050 | 0,0700 | 0,0004 | 300 | 35 | EF |
| **A2** | 0,0375 | 0,040 | 0,250 | 0,015 | 0,0150 | 0,0400 | 0,0600 | 0,0040 | 0,0040 | 0,0006 | 320 | 34 | EF |
| **A3** | 0,0700 | 0,205 | 0,800 | 0,020 | 0,0060 | 0,0400 | 0,0750 | 0,0200 | 0,0040 | - | 460 | 15 | EF |
| **A4** | 0,0750 | 0,600 | 1,775 | 0,015 | 0,0030 | 0,0350 | 0,3500 | 0,0100 | 0,1200 | 0,0005 | 780 | 10 | EF |
| **K1** | 0,2350 | 0,250 | 1,300 | 0,010 | 0,0015 | 0,0350 | 0,1500 | 0,0015 | 0,0300 | 0,0028 | 1500 | 6 | VG |
| **K2** | 0,2850 | 0,275 | 1,175 | 0,018 | 0,0013 | 0,0350 | 0,4500 | 0,0030 | 0,0325 | 0,0028 | 1700 | 5 | EF |
| **K3** | 0,3500 | 0,250 | 1,300 | 0,010 | 0,0015 | 0,0350 | 0,1400 | 0,0015 | 0,0325 | 0,0028 | 1900 | 5 | EF |
| **K4** | 0,4200 | 0,225 | 1,300 | 0,020 | 0,0030 | 0,0350 | 0,3500 | 0,0030 | 0,0275 | 0,0030 | 2100 | 4 | EF |

| | | | | | | | | | | | | | |
|---|---|---|---|---|---|---|---|---|---|---|---|---|---|
| Legierungsangaben in Gew.-%, Rest Eisen und unvermeidbare Verunreinigungen; EF=erfindungsgemäß, VG=Vergleichsbeispiel | | | | | | | | | | | | | |

**Tabelle 2**

| **Bauteil** | **AL** | **KL** | **A-KL** | **Rm [MPa]** | |
|---|---|---|---|---|---|
| V1 | A2 | K1 | 40% | 800 - 900 | VG |
| V2 | A1 | K4 | 40 % | 1000 - 1100 | EF |
| V3 | A4 | K2 | 40 % | 1100 - 1200 | EF |
| V3* | A3 | K1 | 60 % | 1100 -1200 | VG |
| V4* | A3 | K1 | 80% | 1300 - 1400 | VG |
| V4 | A1 | K1 | 90 % | 1300 - 1400 | VG |
| V5 | A2 | K2 | 90 % | 1500 - 1600 | EF |
| V5* | A3 | K3 | 70% | 1500 - 1600 | EF |
| V6 | A4 | K2 | 90 % | 1600 - 1700 | EF |
| V7 | A3 | K3 | 90 % | 1700 - 1800 | EF |
| V7* | A3 | K3 | 80% | 1700 - 1800 | EF |
| V8 | A1 | K4 | 90% | 1900 - 2000 | EF |

## Patentansprüche

1. Stahlflachprodukt für Bauteile für eine Fahrzeugkarosserie, umfassend eine Kernlage, die aus einem mit Mn und B legierten, im fertig gehärteten Zustand eine Zugfestigkeit von mindestens 1700 MPa aufweisenden Stahl besteht, und eine stoffschlüssig mit der Kernlage verbundene Decklage, in deren Bereich das Stahlflachprodukt eine Zugfestigkeit aufweist, die höchstens der Hälfte der Zugfestigkeit des Stahls der Kernlage im fertig gehärteten Zustand entspricht, und deren Dehnung A80 mindestens dem 1,5-fachen der Dehnung A80 der Kernlage im fertig gehärteten Zustand entspricht, wobei die Kernlage aus einem Stahl besteht, der neben Eisen und herstellungsbedingt unvermeidbaren Verunreinigungen aus 0,3 - 0,5 Gew.-% C, 0,150 - 0,350 Gew.-% Si, 1,100 - 1,400 Gew.-% Mn, 0,020 - 0,050 Gew.-% Al, 0,100 - 0,500 Gew.-% Cr, 0,020 - 0,040 Gew.-% Ti und 0,002 - 0,004 Gew.-% B besteht, wobei zu den Verunreinigungen bis zu 0,020 Gew.-% P, bis zu 0,003 Gew.-% S, bis zu 0,100 Gew.-% Cu, bis zu 0,050 Gew.-% Mo, bis zu 0,007 Gew.-% N, bis zu 0,100 Gew.-% Ni, bis zu 0,003 Gew.-% Nb, bis zu 0,010 Gew.-% V, bis zu 0,030 Gew.-% Sn und bis zu 0,005 Gew.-% Ca zählen, und wobei die Decklage aus einem Stahl besteht, der neben Eisen und herstellungsbedingt unvermeidbaren Verunreinigungen aus bis 0,09 Gew.-% C, bis zu 0,7 Gew.-% Si, 0,10 - 1,9 Gew.-% Mn, bis zu 0,06 Gew.-% Al, 0,025 bis zu 0,4 Gew.-% Cr, bis zu 0,025 Gew.-% Nb und bis zu 0,13 Gew.-% Ti besteht, wobei zu den Verunreinigungen bis zu 0,025 Gew.-% P, bis zu 0,015 Gew.-% S, bis zu 0,15 Gew.-% Cu, bis zu 0,05 Gew.-% Mo, bis zu 0,006 Gew.-% N, bis zu 0,15 Gew.-& Ni, bis zu 0,02 Gew.-% V, bis zu 0,001 Gew.-% B, bis zu 0,04 Gew.-% Sn und bis zu 0,003 Gew.-% Ca zählen, wobei die Kernlage 40 - 95 % der Dicke des Stahlflachprodukts einnimmt.

2. Stahlflachprodukt nach Anspruch 1, **dadurch gekennzeichnet, dass** die Kernlage 60 - <70 % der Dicke des Stahlflachprodukts einnimmt.

3. Stahlflachprodukt nach Anspruch 1, **dadurch gekennzeichnet, dass** die Kernlage 70 - 95 % der Dicke des Stahlflachprodukts einnimmt.

4. Stahlflachprodukt nach einem der voranstehenden Ansprüche, **dadurch**
**gekennzeichnet, dass** die Zugfestigkeit der Decklage höchstens einem Drittel der Zugfestigkeit der Kernlage im pressgehärteten Zustand entspricht.

5. Stahlflachprodukt nach einem der voranstehenden Ansprüche, **dadurch**
**gekennzeichnet, dass** im pressgehärteten Zustand die Dehnung A80 der Decklage mindestens doppelt so hoch ist wie die Dehnung A80 der Kernlage.

6. Stahlflachprodukt nach einem der voranstehenden Ansprüche , **dadurch**
**gekennzeichnet, dass** die Kernlage aus einem Stahl besteht, der neben Eisen und herstellungsbedingt unvermeidbaren Verunreinigungen, (in Gew.-%)
C: 0,3 - 0,45 %,
Si: 0,2 - 0,28 %,
Mn: 1,15 - 1,3 %,
Al: 0,03 - 0,04 %,
Cr: 0,14 - 0,45 %,
Ti: 0,026 - 0,034 %,
und
B: 0,002 - 0,003 %
enthält.

7. Stahlflachprodukt nach einem der voranstehenden Ansprüche , **dadurch**
**gekennzeichnet, dass** die Decklage aus einem Stahl besteht, der neben Eisen und herstellungsbedingt unvermeidbaren Verunreinigungen, (in Gew.-%)
C: 0,002 - 0,075,
Si: 0,01 - 0,6 %,
Mn: 0,13 - 1,8 %,
Al: 0,03 - 0,04 %,
Cr: 0,025 - 0,35 %,
Nb: 0,002 - 0,02 %,
und
Ti: 0,002 - 0,12 %
enthält.

## Claims

1. Flat steel product for components for a vehicle body, comprising a core layer consisting of a steel alloyed with Mn and B and having a tensile strength of at least 1700 MPa in the ready-hardened state, and an outer layer which is cohesively bonded to the core layer and in the region of which the flat steel product has a tensile strength of not more than half the tensile strength of the steel of the core layer in the ready-hardened state and the elongation A80 of which is at least 1.5 times the elongation A80 of the core layer in the ready-hardened state, wherein the core layer consists of a steel which, as well as iron and unavoidable impurities from the production process, consists of 0.3-0.5% by weight of C, 0.150-0.350% by weight of Si, 1.100-1.400% by weight of Mn, 0.020-0.050% by weight of Al, 0.100-0.500% by weight of Cr, 0.020-0.040% by weight of Ti and 0.002-0.004% by weight of B, where the impurities include up to 0.020% by weight of P, up to 0.003% by weight of S, up to 0.100% by weight of Cu, up to 0.050% by weight of Mo, up to 0.007% by weight of N, up to 0.100% by weight of Ni, up to 0.003% by weight of Nb, up to 0.010% by weight of V, up to 0.030% by weight of Sn and up to 0.005% by weight of Ca, and wherein the outer layer consists of a steel which, as well as iron and unavoidable impurities from the production process, consists of up to 0.09% by weight of C, up to 0.7% by weight of Si, 0.10-1.9% by weight of Mn, up to 0.06% by weight of Al, 0.025 up to 0.4% by weight of Cr, up to 0.025% by weight of Nb and up to 0.13% by weight of Ti, wherein the impurities include up to 0.025% by weight of P, up to 0.015% by weight of S, up to 0.15% by weight of Cu, up to 0.05% by weight of Mo, up to 0.006% by weight of N, up to 0.15% by weight of Ni, up to 0.02% by weight of V, up to 0.001% by weight of B, up to 0.04% by weight of Sn and up to 0.003% by weight of Ca, wherein the core layer makes up 40-95% of the thickness of the flat steel product.

2. Flat steel product according to Claim 1, **characterized in that** the core layer makes up 60-<70% of the thickness of the flat steel product.

3. Flat steel product according to Claim 1, **characterized in that** the core layer makes up 70-95% of the thickness of the flat steel product.

4. Flat steel product according to any of the preceding claims, **characterizedin that** the tensile strength of the outer layer corresponds to not more than one third of the tensile strength of the core layer in the press-hardened state.

5. Flat steel product according to any of the preceding claims, c**haracterized in that**, in the press-hardened state, the elongation A80 of the outer layer is at least twice as high as the elongation A80 of the core layer.

6. Flat steel product according to any of the preceding claims , **characterized in** t**hat** the core layer consists of a steel which comprises, as well as iron and unavoidable impurities from the production process (in % by weight)
C: 0.3-0.45%,
Si: 0.2-0.28%,
Mn: 1.15-1.3%,
Al: 0.03-0.04%,
Cr: 0.14-0.45%,
Ti: 0.026-0.034%,
and
B: 0.002-0.003%.

7. Flat steel product according to any of the preceding claims , **characterized in that** the outer layer consists of a steel which comprises, as well as iron and unavoidable impurities from the production process (in % by weight)
C: 0.002-0.075%,
Si: 0.01-0.6%,
Mn: 0.13-1.8%,
Al: 0.03-0.04%,
Cr: 0.025-0.35%,
Nb: 0.002-0.02%,
and
Ti: 0.002-0.12%.

## Revendications

1. Produit plat en acier pour composants d'une carrosserie de véhicule, comprenant une couche de noyau, qui est constituée par un acier allié avec Mn et B, présentant à l'état durci fini une résistance à la traction d'au moins 1700 MPa, et une couche de recouvrement reliée avec la couche de noyau par accouplement de matière, dans la zone de laquelle le produit plat en acier présente une résistance à la traction qui est d'au plus la moitié de la résistance à la traction de l'acier de la couche de noyau à l'état durci fini, et dont l'allongement A80 est d'au moins 1,5 fois l'allongement A80 de la couche de noyau à l'état durci fini, la couche de noyau étant constituée par un acier qui, outre le fer et les impuretés inévitables liées à la fabrication, est constitué par 0,3 à 0,5 % en poids de C, 0,150 à 0,350 % en poids de Si, 1,100 à 1,400 % en poids de Mn, 0,020 à 0,050 % en poids d'Al, 0,100 à 0,500 % en poids de Cr, 0,020 à 0,040 % en poids de Ti et 0,002 à 0,004 % en poids de B, les impuretés comprenant jusqu'à 0,020 % en poids de P, jusqu'à 0,003 % en poids de S, jusqu'à 0,100 % en poids de Cu, jusqu'à 0,050 % en poids de Mo, jusqu'à 0,007 % en poids de N, jusqu'à 0,100 % en poids de Ni, jusqu'à 0,003 % en poids de Nb, jusqu'à 0,010 % en poids de V, jusqu'à 0,030 % en poids de Sn et jusqu'à 0,005 % en poids de Ca, et la couche de recouvrement étant constituée par un acier qui, outre le fer et les impuretés inévitables liées à la fabrication, est constitué par jusqu'à 0,09 % en poids de C, jusqu'à 0,7 % en poids de Si, 0,10 à 1,9 % en poids de Mn, jusqu'à 0,06 % en poids d'AI, 0,025 à 0,4 % en poids de Cr, jusqu'à 0,025 % en poids de Nb et jusqu'à 0,13 % en poids de Ti, les impuretés comprenant jusqu'à 0,025 % en poids de P, jusqu'à 0,015 % en poids de S, jusqu'à 0,15 % en poids de Cu, jusqu'à 0,05 % en poids de Mo, jusqu'à 0,006 % en poids de N, jusqu'à 0,15 % en poids de Ni, jusqu'à 0,02 % en poids de V, jusqu'à 0,001 % en poids de B, jusqu'à 0,04 % en poids de Sn et jusqu'à 0,003 % en poids de Ca, la couche de noyau représentant 40 à 95 % de l'épaisseur du produit plat en acier.

2. Produit plat en acier selon la revendication 1, **caractérisé en ce que** la couche de noyau représente 60 à < 70 % de l'épaisseur du produit plat en acier.

3. Produit plat en acier selon la revendication 1, **caractérisé en ce que** la couche de noyau représente 70 à 95 % de l'épaisseur du produit plat en acier.

4. Produit plat en acier selon l'une quelconque des revendications précédentes, **caractérisé en ce que** la résistance à la traction de la couche de recouvrement est d'au plus un tiers de la résistance à la traction de la couche de noyau à l'état durci par pression.

5. Produit plat en acier selon l'une quelconque des revendications précédentes, **caractérisé en ce qu'**à l'état durci par pression, l'allongement A80 de la couche de recouvrement est au moins deux fois plus élevé que l'allongement A80 de la couche de noyau.

6. Produit plat en acier selon l'une quelconque des revendications précédentes, **caractérisé en ce que** la couche de noyau est constituée par un acier qui, outre le fer et les impuretés inévitables liées à la fabrication, contient (en % en poids) :
C : 0,3 à 0,45 %,
Si : 0,2 à 0,28 %,
Mn : 1,15 à 1,3 %,
Al : 0,03 à 0,04 %,
Cr: 0,14 à 0,45 %,
Ti : 0,026 à 0,034 %,
et
B : 0,002 à 0,003 %.

7. Produit plat en acier selon l'une quelconque des revendications précédentes, **caractérisé en ce que** la couche de recouvrement est constituée par un acier qui, outre le fer et les impuretés inévitables liées à la fabrication, contient (en % en poids) :
C: 0,002 à 0,075,
Si : 0,01 à 0,6 %,
Mn : 0,13 à 1,8 %,
Al : 0,03 à 0,04 %,
Cr : 0,025 à 0,35 %,
Nb : 0,002 à 0,02 %,
et
Ti : 0,002 à 0,12 %.
